(19) Europäisches Patentamt
European Patent Office
Office européen des brevets

(11) **EP 0 452 963 B1**

(12) **EUROPEAN PATENT SPECIFICATION**

(45) Date of publication and mention
of the grant of the patent:
**31.07.1996 Bulletin 1996/31**

(51) Int Cl.$^6$: **G02B 21/04**, G02B 21/02,
G02B 17/08

(21) Application number: **91106356.8**

(22) Date of filing: **19.04.1991**

(54) **Objective lens system for use within microscope**

Objektivlinsensystem zur Anwendung in einem Mikroskop

Système objectif de lentille pour l'utilisation avec un microscope

(84) Designated Contracting States:
**DE FR GB**

(30) Priority: **20.04.1990 JP 105796/90**
**20.04.1990 JP 105797/90**

(43) Date of publication of application:
**23.10.1991 Bulletin 1991/43**

(73) Proprietor: **Dainippon Screen Mfg. Co., Ltd.**
**Kamikyo-ku Kyoto 602 (JP)**

(72) Inventor: **Hayashi, Takahisa,**
**Dainippon Screen Mfg. Co., Ltd.**
**Horikawa-dori, Kamikyo-ku, Kyoto (JP)**

(74) Representative: **Goddar, Heinz J., Dr. et al**
**FORRESTER & BOEHMERT**
**Franz-Joseph-Strasse 38**
**80801 München (DE)**

(56) References cited:
**EP-A- 0 347 838          DE-A- 1 447 207**
**US-A- 2 916 966          US-A- 3 305 293**

- **R.S. LONGHURST: "Geometrical and Physical**
  **Optics", 3rd edition, 1973, pages 419-421,**
  **Longman, London, GB**

**Description**

BACKGROUND OF THE INVENTION

The present invention relates to an objective lens system for use within a microscope which is employable in ultraviolet range, in particular, in far ultraviolet range, in which light has a wavelength of shorter than 300 nm.

Description of the Prior Art

It is commonly known in the art that a microscope has a property that, assuming numerical aperture (NA) of an objective lens system used within microscope remains constant, the shorter a wavelength of light used therein, the better its resolution limit. Thus, it is possible to observe a sample in greater detail by shortening the wavelength of illumination light. In addition, illuminating a sample with ultraviolet light would often result in fluorecence of stronger intensity discharged from a sample than fluorecence obtained by illuminating with visible light. Against this background, a microscope employable in ultraviolet range is preferred in the art, because of obtaining more information by observing a sample through such a microscope. Thus, an objective lens system for use within a microscope must be employable in ultraviolet and/or far ultraviolet range.

Among known conventional objective lens systems which is employable in ultraviolet and/or far ultraviolet range is, for example, an objective lens system for use within a microscope described in "Hikari Gijyutsu Contact," Volume 25, Number 2, Page 137 (Feb 1987).

All the lenses of the objective lens system are made of quartz or fluorite. Therefore, the objective lens system is capable of transmitting ultraviolet and/or far ultraviolet light.

However, the objective lens system is provided with a lens group in which a plurality of lenses are brought into optical contact and are joined to each other. This is because there is no practical adhesive agent which transmits far ultraviolet light under the present circumstances, and hence the only method for preventing total reflection at lens junction surfaces is to bring the junction surfaces into optical contact with each other. In the objective lens system, therefore, it is required to work the surfaces to be brought into optical contact in high accuracy, and hence the manufacturing cost for the objective lens system is problematically increased.

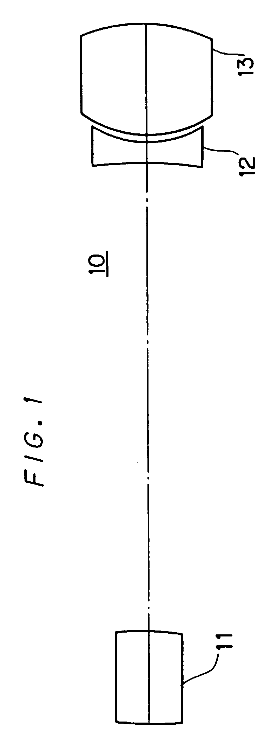

The inventor of the present invention has already suggested an objective lens system for use within a microscope in which such a problem is solved. See Japanese Patent Laid-Open Gazette Nos. 1-319719 and 1-319720. These literature references will be hereinafter referred to as the "precedent applications." Fig. 1 is a block diagram of an objective lens system for use within a microscope according to an embodiment of the precedent applications. An objective lens system 10 includes lenses 11 to 13, which are made of either quartz or fluorite. The lenses 11 to 13, i. e., a first to a third lenses, are displaced in that order from an object side (left-hand side in the figure) to an image formation side (right-hand side in the figure) with preselected air spaces therebetween. This enables the objective lens system 10 to be employable in both ultraviolet and far ultraviolet range. The lenses 11 to 13, as just has been mentioned, are separated from each other; that is, the objective lens system 10 includes no junction surfaces. Thus, including no optical contact, the objective lens system 10 is free from the problem relating to manufacture cost.

The objective lens system 10 cooperates with an image formation lens system (detailed structure thereof will be given later) in order to form an image of an object to be observed on the focal plane of the image formation lens system at a predetermined imaging magnification M. The imaging magnification M is a ratio of the focal length $f_2$ of the image formation lens system to the focal length $f_1$ of the objective lens system 10, and is given as:

$$M = -f_2/f_1 \tag{1}$$

In general, an objective lens system is replaced with other one while an image formation lens system is fixed, whereby the imaging magnification M is changed. Objective lens systems for replacement are necessary for this end, each of the lens systems having a focal length different from the focal length $f_1$.

The equation (1) gives that an objective lens system for replacement which has a focal length of $(f_1/5)$ is necessary to observe an object at the imaging magnification of $5 \cdot M$. The equation (1) also gives that an objective lens system for replacement which has a focal length of $(f_1/10)$ is necessary to observe an object at the imaging magnification of $10 \cdot M$. In order to design an objective lens system which has the focal length of $(f_1/5)$ or $(f_1/10)$ and which has the same number of lenses as the objective lens system 10, for example, it is necessary to increase power of each lens. If the power of each lens is increased, however, aberration is inevitably increased in general. Particularly when the lenses are made of a vitreous material having a low refractive index such as quartz or fluorite, the aberration tends to be increased. In order to increase the power, further, it is necessary to decrease the radius of curvature of each lens. As the result, total reflection is inevitably caused in the lens surface with the small radius of curvature.

Among means for solving such problems, there is a method of increasing the number of lenses forming the objective lens system. Namely, this method is adapted to suppress power of each lens at a relatively low level, while increasing the number of lenses so as to ensure prescribed power. However, the objective lens system is complicated as the number of the lenses forming the same is increased. Further, the cost for the objective lens system is also increased.

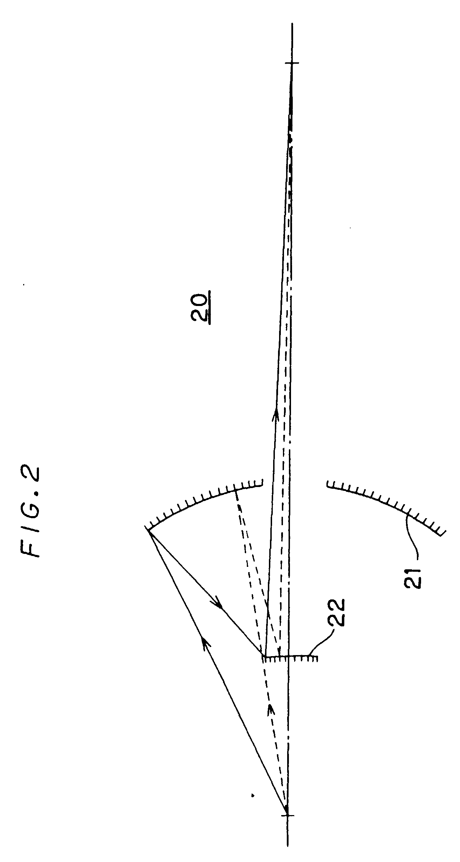

Another means for solving the aforementioned problems is a method of employing a Schwarzchild type objective lens system. Fig. 2 is a block diagram of a Schwarzchild type objective lens system. An objective lens system 20 is described in "Lens Design Fundamentals" by Rudolf Kingslake, Academic Press, 1978, p. 333. As in the figure, the objective lens system 20 comprises a concave spherical mirror 21 and a convex spherical mirror 22. In the objective lens system 20, the mirrors 21 and 22 are substantially concentric, and are arranged to be opposite to each other. While the objective lens system 20 is uncomplicated, it is possible to increase power thereof so as to bring its focal length to $(f_1/5)$.

When the objective lens system 10 is replaced with the objective lens system 20, however, it is necessary to change an object position from that in relation to the objective lens system 10, so far as the position of a pupil is fixed. Namely, it is necessary to perform refocusing after replacement of the objective lens system. This extremely reduces operability of the microscope, in an unpreferable way. It is conceivable to move the overall objective lens system so that no refocusing is required upon replacement of the objective lens system, if change of the pupil position is allowed. However, the change of the pupil position causes an illumination state to be improper when the illumination system is maintained in a fixed state.

Thus, it is difficult to replace the objective lens system 10 with the objective lens system 20 while maintaining both the pupil position and the object position in coincidence.

In addition, such replacement causes change in the pupil size, which in turn causes remarkable change in quantity of illumination light on the object. Therefore, it is necessary to increase the numerical aperture of the objective lens system, so that the pupil thereof is not changed in size even if imaging magnification is increased by replacement of the objective lens system. In the objective lens system 20 of Fig. 2, however, the upper limit of the numerical aperture is about 0.7, and it is difficult in practice to provide an objective lens system having a larger numerical aperture.

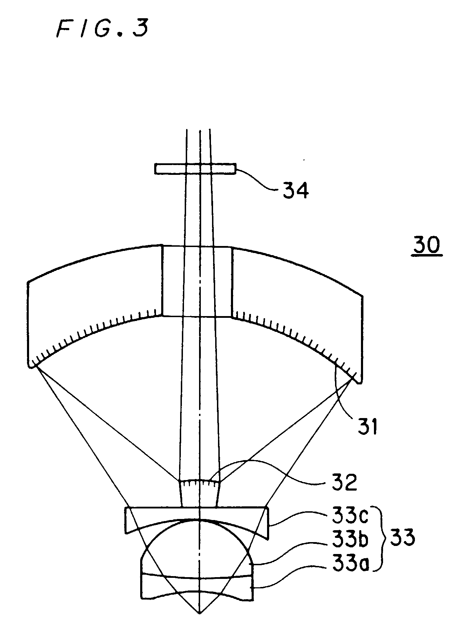

An objective lens system having a larger numerical aperture is described in "Applied Optics and Optical Engineering III," supervised by Kingslake, Academic Press, 1965, p.173, for example. Fig. 3 is a block diagram of the objective lens system. As shown in the figure, an objective lens system 30 includes two spherical mirrors 31 and 32. In the objective lens system 30, further, a lens group 33 consisting of three lenses 33a, 33b and 33c is arranged on an object side (lower side of the figure) with respect to the mirrors 31 and 32, while a lens 34 is arranged on an image side (upper side of the figure), and hence its numerical aperture is 0.72.

As will be understood from the figure, however, optical contact is employed in the lens group 33 for joining the lenses 33a and 33b with each other, to cause a problem similar to the above. Further, the numerical aperture (= 0.72) cannot be regarded as sufficiently large.

Thus, in the case of obtaining an image of the object under a microscope at 5·M power, an objective lens system for replacement must have:

(a) a focal length being 1/5 times larger than that of the objective lens system 10;
(b) parfocality; that is, property of eliminating the necessity of bringing a microscope into focus once again after replacement; and
(c) a pupil which is roughly the same in size with that of the objective lens system 10.

Further, in the case of obtaining an image of the object under a microscope at 10·M power, an objective lens system for replacement must have:

(a) a focal length being 1/10 times larger than that of the objective lens system 10;
(b) parfocality; that is, property of eliminating the necessity of bringing a microscope into focus once again after replacement; and
(c) a pupil which is roughly the same in size with that of the objective lens system 10.

It is an object of the present invention to provide a UV-transparent microscope objective system having a higher numerical aperture as the apparatus of the prior art.

This object is achieved by an objective lens system as claimed in claim 1. Preferred embodiments are subject matter of the sub-claims.

Features, aspects and advantages of the present invention will become more apparent from the following detailed description of the present invention when taken in conjunction with the accompanying drawings.

BRIEF DESCRIPTION OF THE DRAWINGS

Figs. 1 to 3 are a block diagram of a conventional objective lens system for use within a microscope;

Figs. 4, 6, 8, 10, 12, and 14 are a block diagram of an objective lens system according to the present invention;

Figs. 5A, 5B, 5C and 5D illustrate spherical aberration, astigmatism, lateral chromatic aberration and distortion of an optical system utilizing the image formation lens system of Fig. 16 and the objective lens system of Fig. 4, respectively;

Figs. 7A, 7B, 7C and 7D illustrate spherical aberration, astigmatism, lateral chromatic aberration and distortion of an optical system utilizing the image formation lens system of Fig. 16 and the objective lens system of Fig. 6, respectively;

Figs. 9A, 9B, 9C and 9D illustrate spherical aberration, astigmatism, lateral chromatic aberration and distortion of an optical system utilizing the image formation lens system of Fig. 16 and the objective lens system of Fig. 8, respectively;

Figs. 11A, 11B, 11C and 11D illustrate spherical aberration, astigmatism, lateral chromatic aberration and distortion of an optical system utilizing the image formation lens system of Fig. 16 and the objective lens system of Fig. 10, respectively;

Figs. 13A, 13B, 13C and 13D illustrate spherical aberration, astigmatism, lateral chromatic aberration and distortion of an optical system utilizing the image formation lens system of Fig. 16 and the objective lens system of Fig. 12, respectively;

Figs. 15A, 15B, 15C and 15D illustrate spherical aberration, astigmatism, lateral chromatic aberration and distortion of an optical system utilizing the image formation lens system of Fig. 16 and the objective lens system of Fig. 14, respectively; and

Fig. 16 is a block diagram of an image formation lens system.

An objective lens system according to the present invention comprises a convex spherical mirror, a concave spherical mirror, a first meniscus lens and a lens group. In the objective lens system, the convex and the concave spherical mirrors are substantially concentric and are arranged to be opposite to each other. The first meniscus lens has a concave surface directed to an object side and is arranged to be closer to the object side than the spherical mirrors. The lens group includes a plurality of lenses arranged to be closer to an image side than the convex spherical mirror, the lenses being disposed with prescribed air spaces. In the lens group, the lens which is closest to the image side is a second meniscus lens. The second meniscus lens has a concave surface which is directed to the image side.

In the objective lens system, there is no optical contact. Therefore, the objective lens system can be provided at a low cost.

Particularly when the first meniscus lens and the plurality of lenses forming the lens group are made of quartz or fluorite, transmittance in ultraviolet and far ultraviolet regions is improved.

The objective lens system is interchangeable with other objective lens system, according to the precedent applications, for forming an image by cooperating with an image formation lens system. In the objective lens system, since the first meniscus lens is arranged to be closer to the object side than the spherical mirrors, aberration, which causes a problem in increase of the numerical aperture, is corrected by the first meniscus lens. Further, the first meniscus lens also serves as a field flattener.

Further, the lens group is arranged to be closer to the image side than the convex spherical mirror. This allows the perfocal length of the objective lens system to coincide with that of the objective lens system according to the precedent applications while the pupil position of the objective lens system coinciding with that of the objective lens system according to the precedent applications. That is, it is possible to equalize the perfocal lengths by appropriately setting the position of arrangement of the objective lens system according to the present invention. Assuming that the objective lens system comprises only the convex and the concave spherical mirrors, the pupil position cannot be freely selected unless the aberration is sacrificed. In the objective lens system of the present invention, however, the lens group is arranged to be closer to the image side than the convex spherical mirror while being disposed between the convex spherical mirror and the pupil of the objective lens system. Thus, the pupil position can be moved by a desired distance so that the pupil position can be maintained identical to that of the precedent applications.

It is possible to arrange a plane plate in place of the lens group in order to simply maintain the pupil position of the objective lens system constant. However, deterioration in aberration caused by the first meniscus lens is corrected and the power of the overall system is increased without deteriorating the aberration by arranging the lens group having prescribed power.

First Example

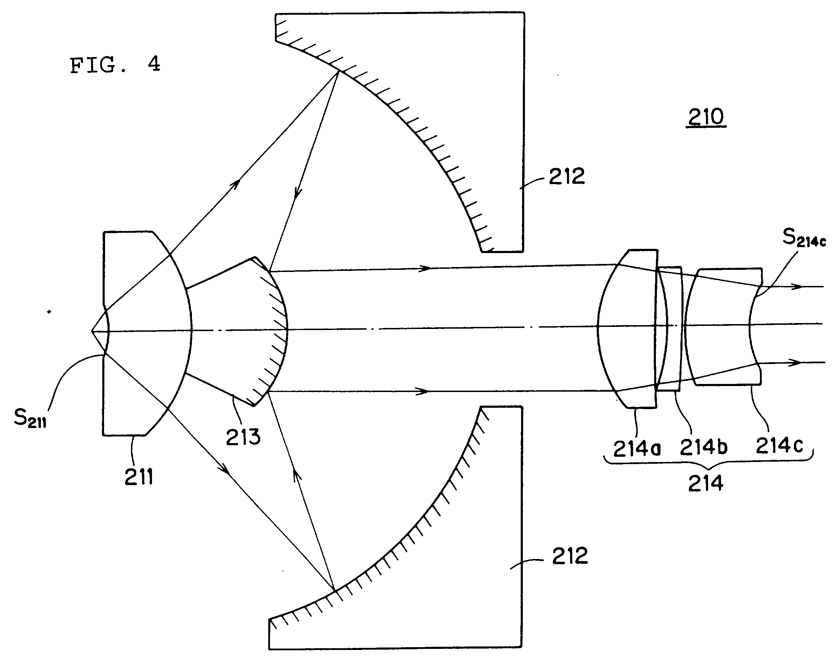

Fig. 4 is a block diagram of a first example according to the present invention. In Fig. 4, an objective lens system 210 comprises a meniscus lens 211, a concave spherical mirror 212, a convex spherical mirror 213, and a lens group 214. In the objective lens system 210, the spherical mirrors 212 and 213 are substantially concentric, and are arranged to be opposite to each other. Further, the meniscus lens 211 is arranged on an object side (left-hand side of the figure) with respect to the spherical mirrors 212 and 213. The meniscus lens 211 has a concave surface $S_{211}$ which is directed to the object side.

The lens group 214 is arranged on an image side (right-hand side of the figure) with respect to the spherical mirrors 212 and 213. In the lens group 214, lenses 214a, 214b and 214c are arranged in this order from the object side to the image side with prescribed air spaces. The lens 214c, which is closest to the image side, is a meniscus lens with a concave surface $S_{214c}$ is directed to the image side.

Table 1 shows lens data of the objective lens system 210.

Table 1

| i | radius of curvature $r_i$ | surface-to-surface distance $d_i$ | material |
|---|---|---|---|
| 1 | -4.815 | 5.000 | quartz |
| 2 | -9.700 | 18.800 | |
| 3 | -19.300 | 12.650 | RS |
| 4 | -6.480 | 19.200 | RS |
| 5 | 7.200 | 3.700 | fluorite |
| 6 | 86.000 | 0.750 | |
| 7 | -12.750 | 1.000 | fluorite |
| 8 | -88.760 | 0.100 | |
| 9 | 10.300 | 4.000 | quartz |
| 10 | 4.538 | | |

Referring to Table 1 (and Tables 3 to 7 described later), a symbol $r_i$ shows the radius of curvature of an i-th (i = 1 to 10) lens or reflecting surface, and $d_i$ shows a spacing between an i-th (i = 1 to 9) surface and an (i + 1)-th surface along an optical axis, where i denotes the number of the lens surfaces or the reflecting surfaces and is defined in order of an optical path. In Table 1 (and Tables 3 to 7 described later), a symbol RS represents that the surface is a reflecting surface.

As will be understood from the Table 1, the meniscus lenses 211 and 214c are made of quartz, whereas the lenses 214a and 214b are made of fluorite. The objective lens system 210 has a focal length $\underline{f}$ of 3.0, a numerical aperture (NA) of 5/6, and an image size of 10.6.

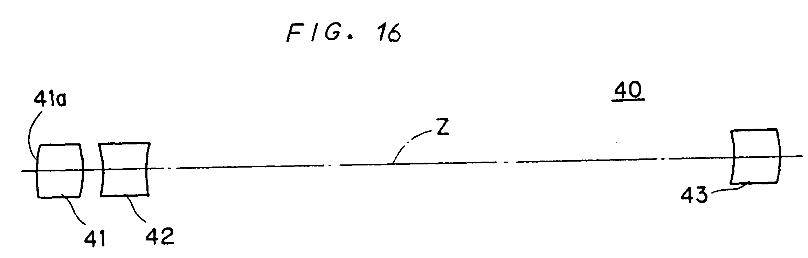

The objective lens system 210 is the so-called infinity corrected objective system so as to be in use within a reflecting type microscope. That is, the objective lens system 210, when used in combination with an image formation lens system 40 of Fig. 16, forms an image on an object on the focal plane of the image formation lens system 40.

Fig. 16 is a block diagram of the image formation lens system, the image formation lens system being identical to the one disclosed in the precedent applications, namely, Japanese Patent Laid-Open Gazette Nos. 1-319719 and 1-319720. In Fig. 16, an image formation lens system 40 includes a first to a third lenses 41 to 43. The first, the second and the third lenses 41, 42 and 43 are displaced in that order from an object side (left-hand side of the figure) to an image formation side (right-hand side of the figure) with predetermined air spaces therebetween.

Table 2 below shows data of the image formation lens system 40.

Table 2

| i | radius of curvature $R_i$ | surface-to-surface distance $D_i$ | material |
|---|---|---|---|
| 1 | 23.000 | 7.00 | fluorite |
| 2 | -31.540 | 2.75 | |
| 3 | -23.180 | 7.00 | quartz |
| 4 | 33.710 | 86.40 | |
| 5 | -10.530 | 7.00 | quartz |
| 6 | -13.488 | | |

In Table 2, a symbol $R_i$ represents radius of curvature of an i-th lens surface from the object side (left-hand side in the figure), and a symbol $D_i$ represents a distance between the i-th lens surface and an (i + 1)-th lens surface along an optical axis Z. As will be understood from the Table 2, the first lens 41 is made of fluorite, the second and the third lenses 42 and 43 are both made of quartz. The focal length f' of the image formation lens system 40 is 300.

Thus, imaging magnification M' of a microscope consisting of the image formation lens system 40 and the objective lens system 210 according to the first example is as follows:

$$M' = -f'/f = -300/3.0 = -100.0$$

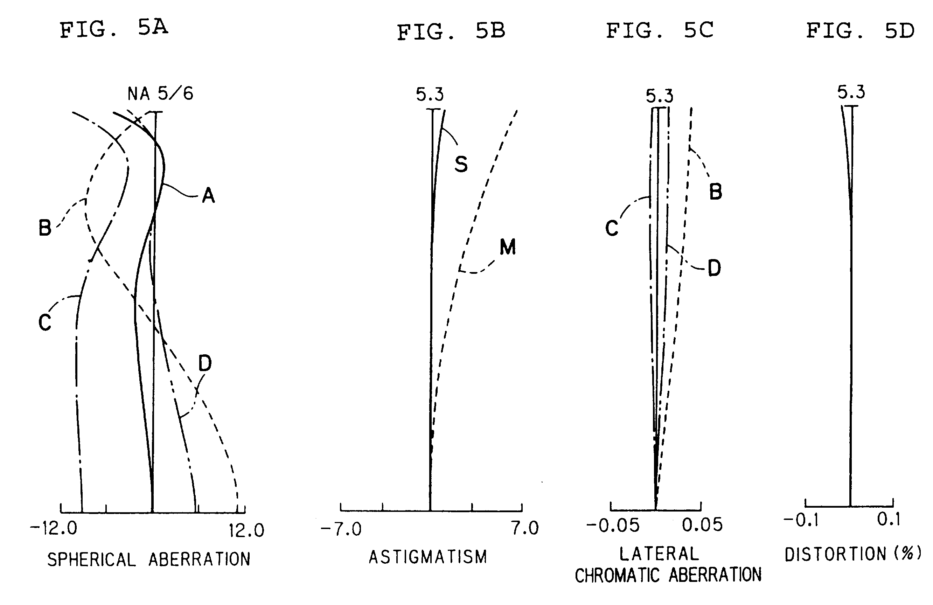

Figs. 5A and 5C illustrate spherical aberration and lateral chromatic aberration of a lens system consisting of the objective lens system 210 and the image formation lens system, respectively. Referring to these figures (and Figs. 7A, 7C, 9A, 9C, 11A, 11C, 13A, 13C, 15A and 15C described later), solid lines A, broken lines B, dashed- and dotted lines C and dashed-dotted-dotted lines D show the results with respect to light of wavelengths of 298.06 (nm), 202.54 (nm), 398.84 (nm) and 253.70 (nm), respectively.

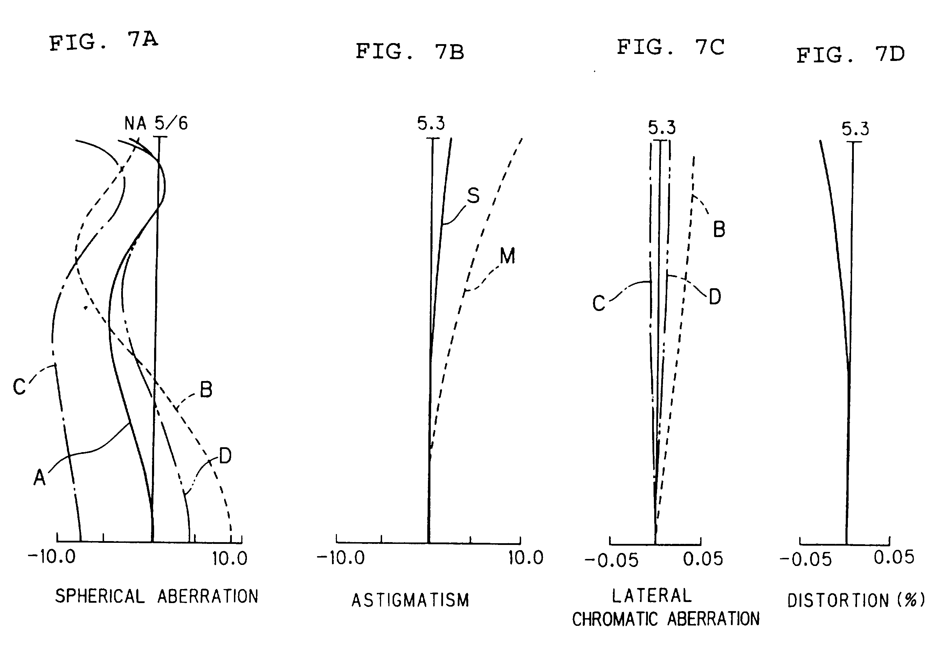

Figs. 5B and 5D illustrate astigmatism and distortion as to the wavelength of 298.06 (nm), respectively. Referring to Fig. 5B (and Figs. 7B, 9B, 11B, 13B and 15B described later), a solid line S shows a sagittal image field, and a broken line M shows a meridional image field.

It is understood from Figs. 5A and 5C that aberration is small with respect to light of ultraviolet and far ultraviolet regions according to the objective lens system 210. Thus, it is obvious that the objective lens system 210 is employable in ultraviolet and far ultraviolet regions. Further, it is clearly understood from Figs. 5B and 5D that the lens system employing the objective lens system 210 has small astigmatism and distortion.

Second Example

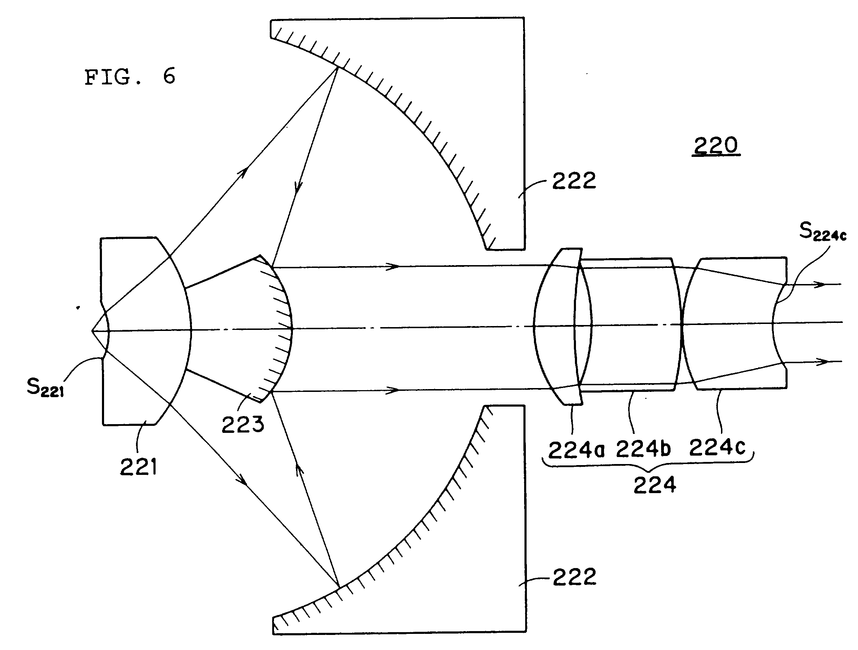

Fig. 6 is a block diagram of a second example according to the present invention. An objective lens system 220 according to the second example has the same structure as the objective lens system 210 of Fig. 4. Thus, detailed description as to the lens structure is omitted here.

Table 3 shows lens data of this objective lens system 220.

Table 3

| i | radius of curvature $r_i$ | surface-to-surface distance $d_i$ | material |
|---|---|---|---|
| 1 | -4.500 | 5.000 | quartz |
| 2 | -9.290 | 19.000 | |
| 3 | -19.340 | 12.650 | RS |
| 4 | -6.512 | 15.000 | RS |
| 5 | 7.584 | 2.500 | fluorite |
| 6 | 23.200 | 1.150 | |
| 7 | -10.663 | 5.700 | quartz |
| 8 | -17.700 | 0.100 | |
| 9 | 9.100 | 5.700 | quartz |
| 10 | 4.470 | | |

As will be understood from Table 3, lenses 221, 224b and 224c are made of quartz, whereas a lens 224a is made of fluorite. The objective lens system 220 has a focal length f of 3.0, a numerical aperture (NA) of 5/6, and an image size of 10.6.

The objective lens system 220 is also so-called infinity corrected objective system similarly to the first example, and is combined with the image formation lens system described in connection therewith. Therefore, imaging magnification M' of a microscope consisting of the image formation lens system and the objective lens system 220 according to the second example is also as follows:

$$M' = -f'/f = -300/3.0 = -100.0$$

Figs. 7A and 7C illustrate spherical aberration and lateral chromatic aberration of a lens system consisting of the objective lens system 220 and the image formation lens system 40, respectively. Figs. 7B and 7D illustrate astigmatism and distortion as to a wavelength of 298.06 (nm) respectively.

It is understood from Figs. 7A and 7C that aberration is small with respect to light of ultraviolet and far ultraviolet regions according to this objective lens system 220. Thus, it is obvious that the objective lens system 220 is employable in ultraviolet and far ultraviolet regions. It is clearly understood from Figs. 7B and 7D that the lens system employing the objective lens system 220 has small astigmatism and distortion.

Third Example

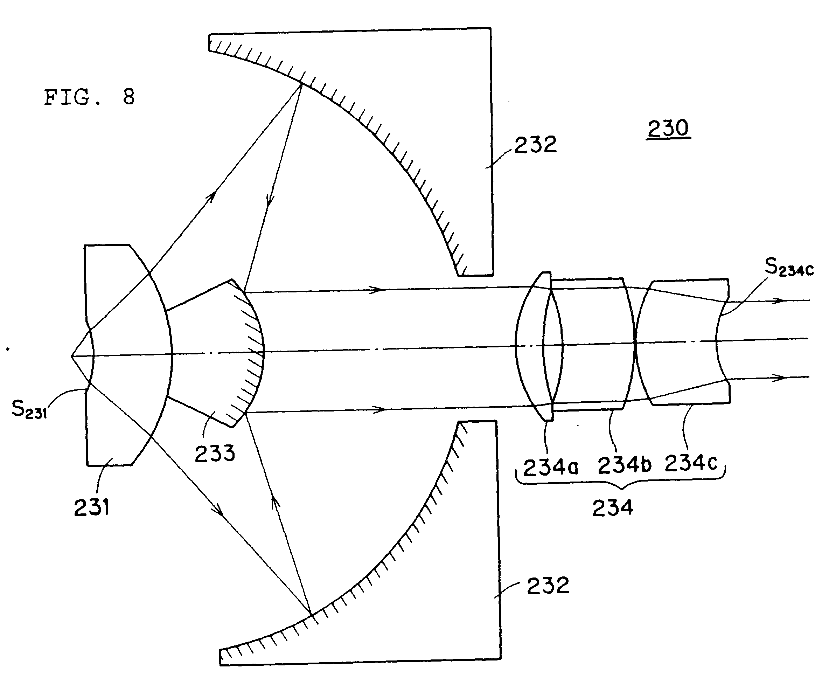

Fig. 8 is a block diagram of a third example according to the present invention. An objective lens system 230 according to the third example also has the same structure as the objective lens system 210 of Fig. 4. Therefore, detailed description of the lens structure is omitted here.

Table 4 shows lens data of this objective lens system 230.

Table 4

| i | radius of curvature $r_i$ | surface-to-surface distance $d_i$ | material |
|---|---|---|---|
| 1 | -5.710 | 4.900 | fluorite |
| 2 | -10.355 | 18.500 | |
| 3 | -19.246 | 12.700 | RS |
| 4 | -6.405 | 15.500 | RS |
| 5 | 6.873 | 1.850 | fluorite |
| 6 | 15.450 | 1.300 | |
| 7 | -9.548 | 4.550 | quartz |
| 8 | -13.590 | 0.100 | |
| 9 | 9.100 | 5.000 | quartz |
| 10 | 4.453 | | |

As will be understood from Table 4, lenses 234b and 234c are made of quartz, whereas lenses 231 and 234a are made of fluorite.

Further, the objective lens system 230 has a focal length $\underline{f}$ of 3.0, a numerical aperture (NA) of 5/6, and an image size of 10.6.

Also the objective lens system 230 is the so-called infinity corrected objective system similarly to the first and second examples, and is combined with the image formation lens system as before . Therefore, imaging magnification M' of a microscope formed by the image formation lens system and the objective lens system 230 according to the third example is also as follows:

$$M' = -f'/f = -300/3.0 = -100.0$$

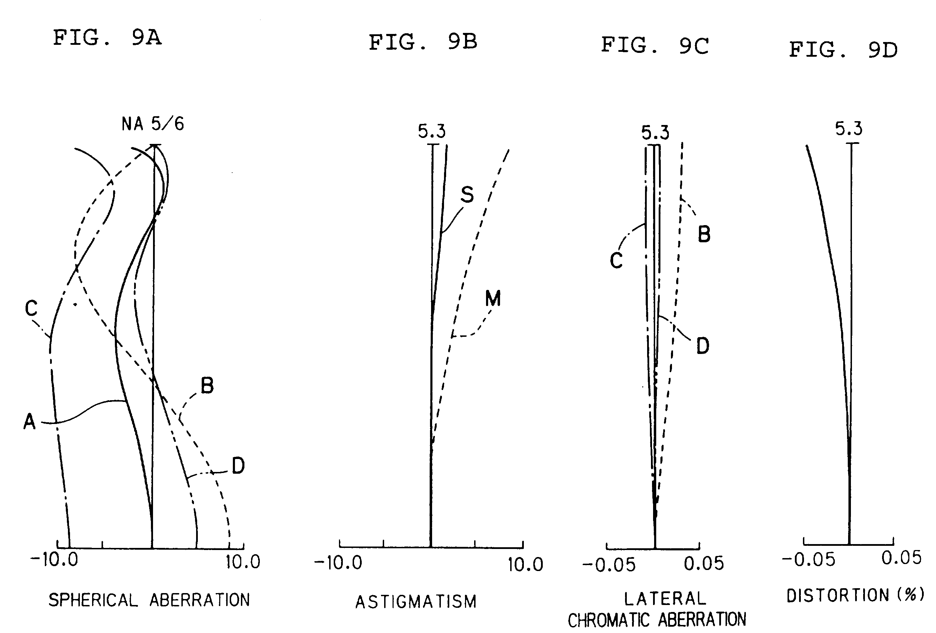

Figs. 9A and 9C illustrate spherical aberration and lateral chromatic aberration of a lens system consisting of the objective lens system 230 and the image formation lens system 40, respectively. Figs. 9B and 9D illustrate astigmatism and distortion with respect to a wavelength of 298.06 (nm), respectively.

It is understood from Figs. 9A and 9C that aberration with respect to light of ultraviolet and far ultraviolet regions is small according to the objective lens system 230. Therefore, it is clear that the objective lens system 230 is employable in the ultraviolet and far ultraviolet regions. Further, it is understood from Figs. 9B and 9D that a lens system employing the objective lens system 230 has small astigmatism and distortion.

Fourth Example

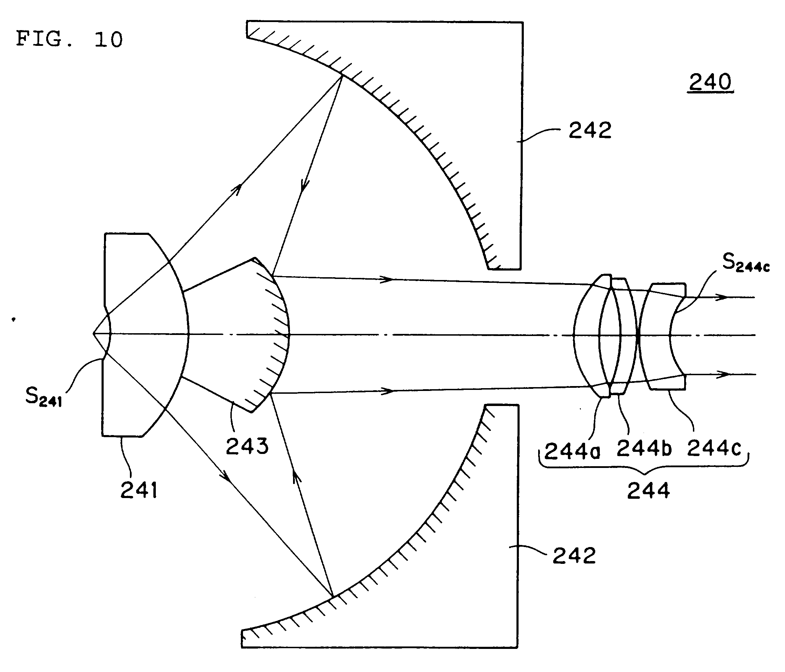

Fig. 10 is a block diagram of a fourth example according to the present invention. An objective lens system 240 according to the fourth example also has the same structure as the objective lens system 210 of Fig. 4. Therefore, detailed description of the lens structure is omitted here.

Table 5 shows lens data of the objective lens system 240.

Table 5

| i | radius of curvature $r_i$ | surface-to-surface distance $d_i$ | material |
|---|---|---|---|
| 1 | -4.457 | 4.900 | fluorite |
| 2 | -9.161 | 19.000 | |
| 3 | -19.270 | 12.670 | RS |
| 4 | -6.540 | 17.750 | RS |
| 5 | 5.679 | 1.650 | quartz |
| 6 | 8.790 | 1.350 | |
| 7 | -7.880 | 1.000 | quartz |

Table 5   (continued)

| i | radius of curvature $r_i$ | surface-to-surface distance $d_i$ | material |
|---|---|---|---|
| 8 | -10.392 | 0.100 | |
| 9 | 7.790 | 2.000 | quartz |
| 10 | 4.480 | | |

As will be understood from Table 5, a lens 241 is made of fluorite, whereas lenses 244a, 244b and 244c are made of quartz. The objective lens system 240 has a focal length $\underline{f}$ of 3.0, a numerical aperture (NA) of 5/6, and an image size of 10.6.

The objective lens system 240 is also the so-called infinity corrected objective system similarly to the first to third examples, and is combined with the image formation lens system as before. Therefore, imaging magnification M' of a microscope formed by the image formation lens system and the objective lens system 240 according to the fourth example is also as follows:

$$M' = -f'/f = -300/3.0 = -100.0$$

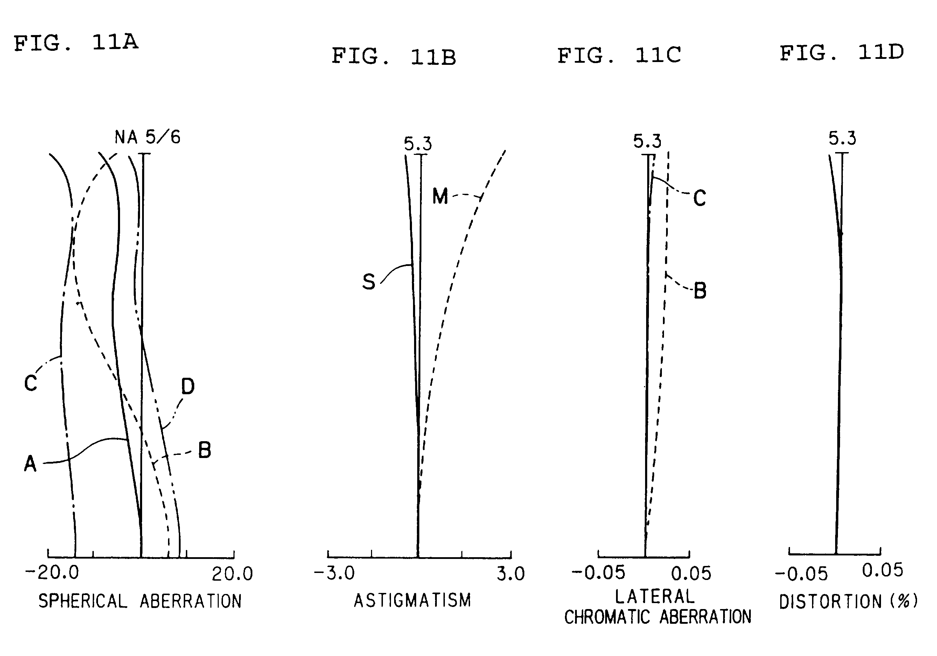

Figs. 11A and 11C illustrate spherical aberration and lateral chromatic aberration of a lens system consisting of the objective lens system 240 and the image formation lens system 40, respectively. Figs. 11B and 11D illustrate astigmatism and distortion with respect to a wavelength of 298.06 (nm), respectively.

It is understood from Figs. 11A and 11C that aberration is small with respect to light of ultraviolet and far ultraviolet regions according to the objective lens system 240. Therefore, it is obvious that the objective lens system 240 is employable in the ultraviolet and far ultraviolet regions. Further, it is understood from Figs. 11B and 11D that a lens system employing the objective lens system 240 has small astigmatism and distortion.

Fifth Example

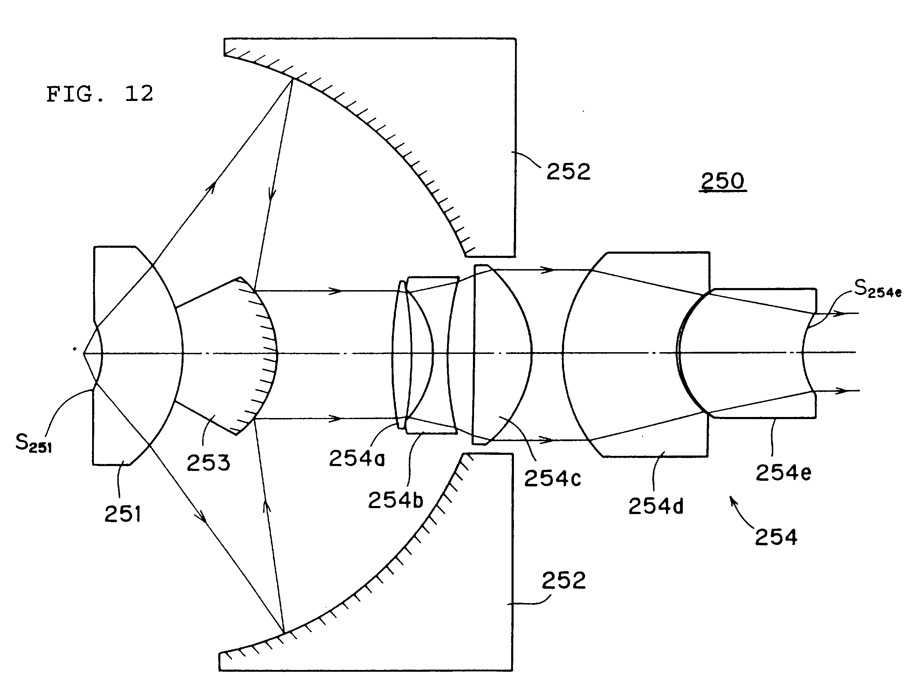

Fig. 12 is a block diagram of an fifth example according to the present invention. As in Fig. 12, an objective lens system 250 comprises a meniscus lens 251, a concave spherical mirror 252, a convex spherical mirror 253, and a lens group 254. In the objective lens system 250, the spherical mirrors 252 and 253 are substantially concentric, and are arranged to be opposite to each other. The meniscus lens 251 is arranged on an object side (left-hand side of the figure) with respect to these spherical mirrors 252 and 253. The meniscus lens 251 has a concave surface $S_{251}$ which is directed to the object side.

The lens group 254 is arranged on an image side (right-hand side of the figure) with respect to the spherical mirror 253. In the lens group 254, lenses 254a to 254e are arranged in this order from the object side to the image side with prescribed air spaces. The lens 254e, which is closest to the image side, is a meniscus lens with a concave surface $S_{254e}$ directed to the image side.

Table 6 shows lens data of the objective lens system 250.

Table 6

| i | radius of curvature $r_i$ | surface-to-surface distance $d_i$ | material |
|---|---|---|---|
| 1 | -4.754 | 5.000 | quartz |
| 2 | -9.350 | 18.510 | |
| 3 | -19.148 | 12.590 | RS |
| 4 | -6.281 | 7.090 | RS |
| 5 | 23.675 | 1.150 | fluorite |
| 6 | -30.000 | 1.540 | |
| 7 | -5.570 | 0.900 | quartz |
| 8 | 25.731 | 1.500 | |
| 9 | -150.000 | 3.480 | fluorite |
| 10 | -7.166 | 2.000 | |
| 11 | 9.564 | 7.200 | quartz |
| 12 | 4.910 | 0.110 | |
| 13 | 4.994 | 7.880 | fluorite |
| 14 | 4.638 | | |

As will be understood from Table 6 , the lenses 251, 254b and 254d are made of quartz, whereas the lenses 254a, 254c and 254e are made of fluorite. The objective lens system 250 has a focal length $\underline{f}$ of 300/108 (= 2.78), a numerical aperture (NA) of 0.90, and an image size of 10.6.

Also the objective lens system 250 is the so-called infinity corrected objective system similarly to the first to fourth examples, and is combined with the image formation lens system as before . Therefore, imaging magnification M' of a microscope formed by the image formation lens system 40 and the objective lens system 250 according to the fifth example is as follows:

$$M' = -f'/f = -108.0$$

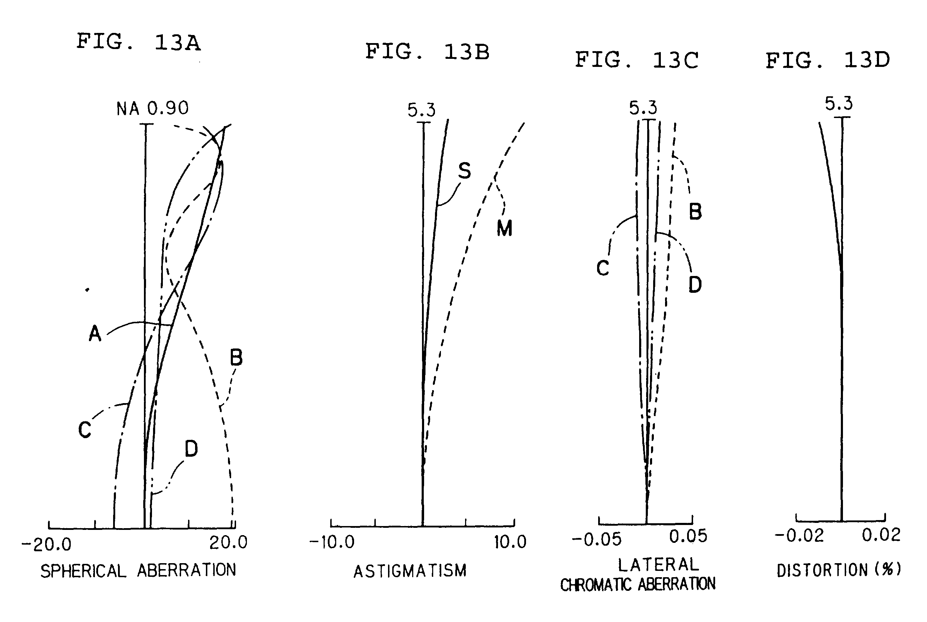

Figs. 13A and 13C illustrate spherical aberration and lateral chromatic aberration of a lens system consisting of the objective lens system 250 and the image formation lens system 40, respectively. Figs. 13B and 13D illustrate astigmatism and distortion with respect to a wavelength of 298.06 (nm), respectively.

It is understood from Figs. 13A and 13C that aberration is small with respect to light of ultraviolet and far ultraviolet regions according to the objective lens system 250. Therefore, it is obvious that the objective lens system 250 is employable in the ultraviolet and far ultraviolet regions. Further, it is clearly understood from Figs. 13B and 13D that a lens system employing the objective lens system 250 has small astigmatism and distortion.

Sixth Example

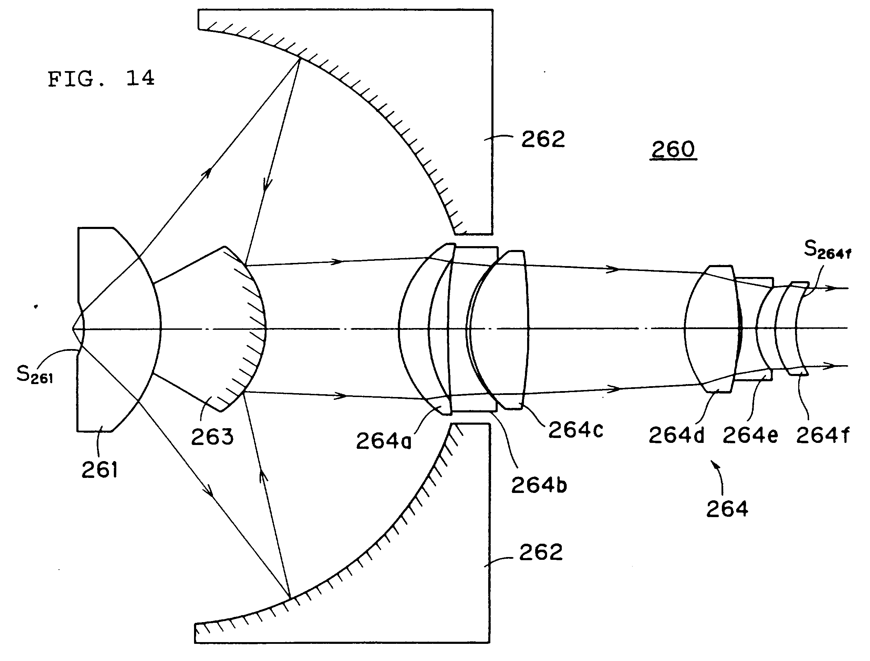

Fig. 14 is a block diagram of a sixth example according to the present invention. In Fig. 14, an objective lens system 260 comprises a meniscus lens 261, a concave spherical mirror 262, a convex spherical mirror 263, and a lens group 264. In the objective lens system 260, the spherical mirrors 262 and 263 are substantially concentric, and are arranged to be opposite to each other. Further, the meniscus lens 261 is arranged on an object side (left-hand side of the figure) with respect to these spherical mirrors 262 and 263. The meniscus lens 261 has a concave surface $S_{261}$ which is directed to the object side.

The lens group 264 is arranged on an image side (right-hand side of the figure) with respect to the spherical mirror 263. In the lens group 264, lenses 264a to 264f are arranged in this order from the object side to the image side with prescribed air spaces. The lens 264f, which is closest to the image side, is a meniscus lens with a concave surface $S_{264f}$ directed to the image side.

Table 7 shows lens data of the objective lens system 260.

Table 7

| i | radius of curvature $r_i$ | surface-to-surface distance $d_i$ | material |
|---|---|---|---|
| 1 | -3.880 | 4.670 | quartz |
| 2 | -8.380 | 19.200 | |
| 3 | -19.040 | 12.520 | RS |
| 4 | -6.270 | 8.170 | RS |
| 5 | 6.934 | 1.810 | quartz |
| 6 | 8.278 | 1.280 | |
| 7 | 81.600 | 0.950 | quartz |
| 8 | 6.148 | 0.240 | |
| 9 | 6.729 | 3.600 | fluorite |
| 10 | -44.622 | 9.890 | |
| 11 | 6.018 | 3.350 | quartz |
| 12 | -40.100 | 0.250 | |
| 13 | -13.127 | 0.960 | quartz |
| 14 | 3.990 | 1.200 | |
| 15 | 4.330 | 1.300 | quartz |
| 16 | 5.024 | | |

As will be understood from Table 7, the lenses 261, 264a, 264b, 264d, 264e and 264f are made of quartz, whereas the lens 264c is made of fluorite.

The objective lens system 260 has a focal length $\underline{f}$ of 300/108 (= 2.78), a numerical aperture (NA) of 0.90, and an image size of 10.6. Also the objective lens system 260 is the so-called infinity corrected objective system similarly to the first to fifth examples, and is combined with the image formation lens system as before. Therefore, imaging magnification M' of a microscope formed by the image formation lens system and the objective lens system 260 according to the sixth example is as follows:

$$M' = -f'/f = -108.0$$

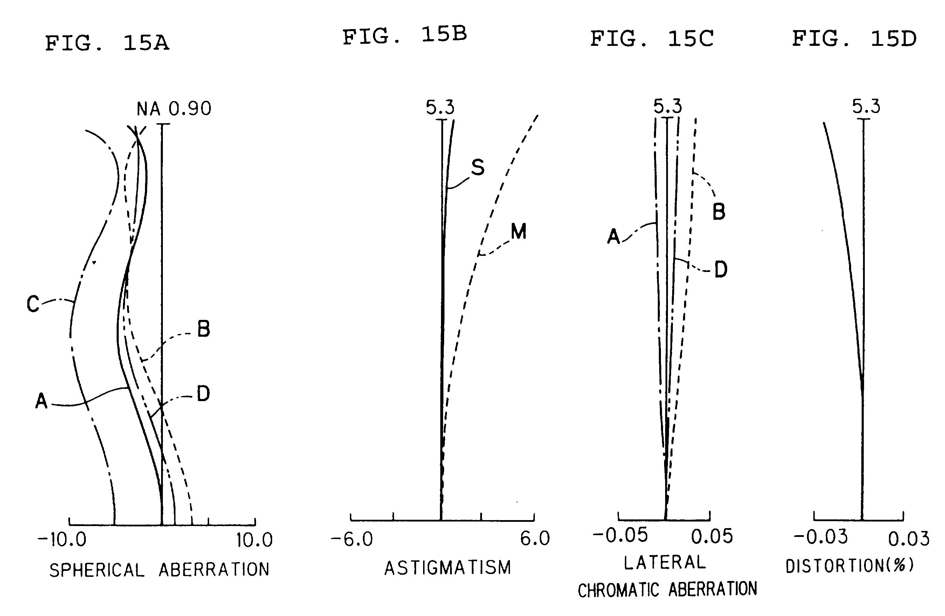

Figs. 15A and 15C illustrate spherical aberration and lateral chromatic aberration of a system consisting of the objective lens system 260 and the image formation lens system 40, respectively. Further, Figs. 15B and 15D illustrate astigmatism and distortion with respect to a wavelength of 298.06 (nm), respectively.

It is understood from Figs. 15A and 15C that aberration is small with respect to light of ultraviolet and far ultraviolet regions according to the objective lens system. Therefore, it is clear that the objective lens system 260 is employable in the ultraviolet and far ultraviolet regions. Further, it is clearly understood from Figs. 15B and 15D that a lens system employing the objective lens system 260 has small astigmatism and distortion.

As hereinabove described, the objective lens systems 210, 220, 230, 240, 250 and 260 according to the invention are employable in ultraviolet and far ultraviolet regions, and have excellent characteristics in these wavelength regions. In each example, no optical contact is required and the objective lens system can be provided at a low cost.

Although no particular description has been made in relation to the above, it has been confirmed that each example exhibits small aberration in visible and infrared regions, and the objective lens system 210, 220, 230, 240, 250 or 260 is employable in a range over infrared and far ultraviolet regions.

Now referring again to the precedent applications, the objective lens system 10 (Fig. 1) is combined with the image formation lens system as used with the examples, to thereby obtain the imaging magnification M of -10. More precisely, the focal length of the objective lens system 10 is 30, whereas the focal length of any of the objective lens systems 210, 220, 230 and 240 is 3.0. Hence, the imaging magnification M can be varied from -10 to -100 by replacing, for instance, the objective lens system 10 with the objective lens system 210 while fixing the image formation lens system 40 in the same position. Further, the focal length of any of the objective lens systems 250 and 260 is 2.78, so that the imaging magnification M can be varied from -10 to -108 by replacing, for instance, the objective lens system 10 with the objective lens system 250 while fixing the image formation lens system in the same position.

Each of the objective lens systems 210, 220, 230, 240, 250 and 260 has a parfocal relation with respect to the objective lens system 10 as set forth. This eliminates time consuming process of bringing the microscope into focus after replacement (for example, after the objective lens system 10 has replaced the objective lens system 210), whereby operation of the microscope would be greately improved.

## Claims

1. An UV-transparent objective lens system for use within a microscope, comprising:

   a convex (213; 223; 233; 243; 253; 263) and a concave (212; 222; 232; 242; 252; 262) spherical mirror being substantially concentric, said convex and concave spherical mirrors (213, 212; 223, 222; 233, 232; 243, 242; 253, 252; 263, 262) being arranged to be opposite to each other,

   a first meniscus lens (211; 221; 231; 241; 251; 261) arranged along an optical path to be closer to an object side than said convex and concave spherical mirrors (213, 212; 223, 222; 233, 232; 243, 242; 253, 252; 263, 262), and

   a lens group (214; 224; 234; 244; 254; 264) which is arranged to be closer to an image side than said convex spherical mirror (213; 223; 233; 243; 253; 263),

   characterized in that said lens group (214; 224; 234; 244; 254; 264) consists of a plurality of air spaced lenses and in that said first meniscus lens (211; 221; 231; 241; 251; 261) is the sole optical element arranged in the optical path between the object side and said convex and concave spherical mirrors (213, 212; 223, 222; 233, 232; 241, 242; 253, 252; 263, 262).

2. An objective lens system according to claim 1, characterized in that said first meniscus lens (121; 131; 151) has a concave surface (121a; 131a; 151a) which is directed to the object side.

3. A lens system according to claim 1, characterized in that said lens group (214; 224; 234; 244; 254; 264) has a second meniscus lens (214c; 224c; 234c; 244c; 254e; 264f), said second meniscus lens being a lens closer to said image side and having a concave surface ($S_{214c}$; $S_{224c}$; $S_{23}4_c$; $S_{244c}$; $S_{254e}$, $S_{264f}$) which is directed to the image side.

4. A lens system according to claim 1, characterized in that said first meniscus lens (211; 221; 231; 241; 251; 261) and said plurality of lenses (214; 224; 234; 244; 254; 264) are made of quartz or fluorite.

5. Use of an objective lens system (210; 220; 230; 240; 250; 260) as claimed in one of claims 1 to 4 in a microscope.


**Patentansprüche**

1. UV-durchlässiges Objektivlinsensystem zur Verwendung in einem Mikroskop, mit:

   einem konvexen (213; 223; 233; 243; 253; 263) und einem konkaven (212; 222; 232; 242; 252; 262) sphärischen Spiegel, die im wesentlichen konzentrisch sind, wobei der konvexe und konkave sphärische Spiegel (213, 212; 223, 222; 233, 232; 243, 242; 253, 252; 263, 262) so angeordnet sind, daß sie einander gegenüberliegen,

   einer ersten Meniskuslinse (211; 221; 231; 241; 251; 261) die entlang einem optischen Pfad so angeordnet ist, daß sie näher an einer Objektseite liegt als der konvexe und konkave sphärische Spiegel (213, 212; 223, 222; 233, 232; 243, 242; 253, 252; 263, 262), und

   einer Linsengruppe (214; 224; 234; 244; 254; 264), die so angeordnet ist, daß sie näher an einer Bildseite liegt, als der konvexe sphärische Spiegel (213; 223; 233; 243; 253; 263),

   dadurch gekennzeichnet, daß die Linsengruppe (214; 224; 234; 244; 254; 264) aus einer Vielzahl von Linsen mit Luftzwischenraum besteht und daß die erste Meniskuslinse (211; 221; 231; 241; 251; 261) das einzige optische Element ist, das in dem optischen Pfad zwischen der Objektseite und dem konvexen und konkaven sphärischen Spiegel (213, 212; 223, 222; 233, 232; 243, 242; 253, 252; 263, 262) angeordnet ist.

2. Objektivlinsensystem nach Anspruch 1, dadurch gekennzeichnet, daß die erste Meniskuslinse (121; 131; 151) eine konkave Fläche (121a; 131a; 151a) hat, die zu der Objektseite gerichtet ist.

3. Linsensystem nach Anspruch 1, dadurch gekennzeichnet, daß die Linsengruppe (214; 224; 234; 244; 254; 264) eine zweite Meniskuslinse (214c; 224c; 234c; 244c; 254e; 264f) hat, wobei die zweite Meniskuslinse eine Linse ist, die näher an der Bildseite liegt und eine konkave Fläche ($S_{214c}$; $S_{224c}$; $S_{234c}$; $S_{244c}$; $S_{254e}$, $S_{264f}$) hat, die zu der Bildseite gerichtet ist.

4. Linsensystem nach Anspruch 1, dadurch gekennzeichnet, daß die erste Meniskuslinse (211; 221; 231; 241; 251; 261) und die Vielzahl von Linsen (214; 224; 234; 244; 254; 264) aus Quarz oder Fluorit hergestellt sind.

5. Verwendung eines Objektivlinsensystems (210; 220; 230; 240; 250; 260) wie in einem der Ansprüche 1 bis 4 beansprucht in einem Mikroskop.


**Revendications**

1. Système de lentilles d'objectif transparentes aux ultraviolets pour une utilisation au sein d'un microscope, comprenant :

   un miroir sphérique convexe (213 ; 223 ; 233 ; 243 ; 253 ; 263) et un miroir sphérique concave (212 ; 222 ; 232 ; 242 ; 252 ; 262) qui sont sensiblement concentriques, lesdits miroirs sphériques convexe et concave (213, 212 ; 223, 222 ; 233, 232 ; 243, 242 ; 253, 252 ; 263, 262) étant disposés pour s'opposer l'un à l'autre, une première lentille ménisque (211 ; 221 ; 231 ; 241 ; 251 ; 261) disposée sur un trajet optique pour être plus proche d'un côté objet que lesdits miroirs sphériques convexe et concave (213, 212 ; 223, 222 ; 233, 232 ; 243, 242 ; 253, 252 ; 263, 262), et
   un groupe de lentilles (214 ; 224 ; 234 ; 244 ; 254 ; 264) qui est disposé pour être plus proche d'un côté image que ledit miroir sphérique convexe (213 ; 223 ; 233 ; 243 ; 253 ; 263),

   caractérisé en ce que ledit groupe de lentilles (214 ; 224 ; 234 ; 244 ; 254 ; 264) se compose d'une pluralité de lentilles isolées par l'air et en ce que ladite première lentille ménisque (211 ; 221 ; 231 ; 241 ; 251 ; 261) constitue le seul élément optique disposé sur le trajet optique entre le côté objet et lesdits miroirs sphériques convexe et concave (213, 212 ; 223, 222 ; 233, 232 ; 243, 242 ; 253, 252 ; 263, 262).

2. Système de lentilles d'objectif selon la revendication 1, caractérisé en ce que ladite première lentille ménisque (121 ; 131 ; 151) présente une surface concave (121a ; 131a ; 151a) dirigée vers le côté objet.

3. Système de lentilles selon la revendication 1, caractérisé en ce que ledit groupe de lentilles (214 ; 224 ; 234 ; 244 ; 254 ; 264) comprend une seconde lentille ménisque (214c ; 224c ; 234c ; 244c ; 254e ; 264f), ladite seconde lentille ménisque étant une lentille plus proche dudit côté image et présentant une surface concave ($S_{214c}$ ; $S_{224c}$ ; $S_{234c}$ ; $S_{244c}$ ; $S_{254e}$ ; $S_{264f}$) dirigée vers le côté image.

4. Système de lentilles selon la revendication 1, caractérisé en ce que ladite première lentille ménisque (211 ; 221 ; 231 ; 241 ; 251 ; 261) et ladite pluralité de lentilles (214 ; 224 ; 234 ; 244 ; 254 ; 264) sont fabriquées en quartz ou en fluorine.

5. Utilisation d'un système de lentilles d'objectif (210 ; 220 ; 230 ; 240 ; 250 ; 260) selon l'une des revendications 1 à 4, au sein d'un microscope.

FIG. 1

FIG.2

FIG. 3

FIG. 4

210

$S_{214c}$

214c
214b
214
214a

212

212

213

211

$S_{211}$

EP 0 452 963 B1

FIG. 5A

FIG. 5B

FIG. 5C

FIG. 5D

NA 5/6

A

B

C

D

-12.0          12.0

SPHERICAL ABERRATION

5.3

S

M

-7.0          7.0

ASTIGMATISM

5.3

C

B

D

-0.05    0.05

LATERAL
CHROMATIC ABERRATION

5.3

-0.1          0.1

DISTORTION (%)

FIG. 6

220

S₂₂₁

222

223

221

224a 224b 224c

224

S₂₂₄c

EP 0 452 963 B1

FIG. 7A

FIG. 7B

FIG. 7C

FIG. 7D

NA 5/6

5.3

5.3

5.3

C

B

A

D

S

M

C

B

D

−10.0          10.0

SPHERICAL ABERRATION

−10.0          10.0

ASTIGMATISM

−0.05     0.05

LATERAL
CHROMATIC ABERRATION

−0.05     0.05

DISTORTION (%)

EP 0 452 963 B1

FIG. 8

230

232

232

$S_{231}$

231

233

234a  234b  234c

234

$S_{234c}$

EP 0 452 963 B1

FIG. 9A

FIG. 9B

FIG. 9C

FIG. 9D

NA 5/6

5.3

5.3

5.3

SPHERICAL ABERRATION

ASTIGMATISM

LATERAL
CHROMATIC ABERRATION

DISTORTION (%)

EP 0 452 963 B1

FIG. 10

240

242

$S_{244c}$

241

$S_{241}$

243

244a 244b 244c

244

242

EP 0 452 963 B1

FIG. 11A

FIG. 11B

FIG. 11C

FIG. 11D

NA 5/6

C

A

D

B

-20.0          20.0

SPHERICAL ABERRATION

5.3

M

S

-3.0          3.0

ASTIGMATISM

5.3

C

B

-0.05     0.05

LATERAL
CHROMATIC ABERRATION

5.3

-0.05    0.05

DISTORTION (%)

EP 0 452 963 B1

FIG. 12

FIG. 13A

NA 0.90

A

B

C

D

-20.0      20.0

SPHERICAL ABERRATION

FIG. 13B

5.3

S

M

-10.0      10.0

ASTIGMATISM

FIG. 13C

5.3

B

C

D

-0.05    0.05

LATERAL
CHROMATIC ABERRATION

FIG. 13D

5.3

-0.02    0.02

DISTORTION (%)

EP 0 452 963 B1

FIG. 14

EP 0 452 963 B1

FIG. 15A

NA 0.90

C

A

B

D

-10.0          10.0

SPHERICAL ABERRATION

FIG. 15B

5.3

S

M

-6.0          6.0

ASTIGMATISM

FIG. 15C

5.3

A

B

D

-0.05     0.05

LATERAL
CHROMATIC ABERRATION

FIG. 15D

5.3

-0.03    0.03

DISTORTION(%)

EP 0 452 963 B1

EP 0 452 963 B1

# FIG. 16